# EUROPEAN PATENT SPECIFICATION

(11) **EP 3 974 469 B1**
(45) Date of publication and mention of the grant of the patent: **03.07.2024**
(21) Application number: 20808916.9
(22) Date of filing: 14.05.2020
(51) Int. Cl.: C08K 7/02, C08L 77/02, C08L 77/06

(54) **POLYAMIDE-BASED RESIN COMPOSITION FOR INJECTION MOLDING AND SLIDING COMPONENT FORMED THEREFROM**
HARZZUSAMMENSETZUNG AUF POLYAMIDBASIS ZUM SPRITZGIESSEN UND DARAUS HERGESTELLTE GLEITKOMPONENTE
COMPOSITION DE RÉSINE À BASE DE POLYAMIDE POUR MOULAGE PAR INJECTION ET COMPOSANT COULISSANT FORMÉ À PARTIR DE CELLE-CI

(30) Priority: 20.05.2019 JP 2019094427
(43) Date of publication of application: 30.03.2022
(73) Proprietor: TOYOBO MC Corporation, Osaka-shi, Osaka 5300001 (JP)
(72) Inventor: IWAMURA, Kazuki, Otsu-shi, Shiga 520-0292 (JP); YOSHIMURA, Nobuhiro, Otsu-shi, Shiga 520-0292 (JP); TAKITA, Motonori, Otsu-shi, Shiga 520-0292 (JP)
(74) Representative: Müller-Boré & Partner Patentanwälte PartG mbB
(86) International application number: PCT/JP2020/019263
(87) International publication number: WO 2020/235443

(56) References cited:
- WO-A1-2015/053181
- JP-A- H0 741 665
- JP-A- H0 984 168
- JP-A- H09 227 695
- JP-A- 2000 248 173
- JP-A- 2002 241 510
- JP-A- 2003 192 924
- JP-A- 2012 102 189
- JP-A- 2016 108 372
- JP-A- 2018 123 178

## Description

### TECHNICAL FIELD

The present invention relates to a polyamide-based resin composition for injection molding, and more particularly to a polyamide-based resin composition for injection molding suitable for a sliding component.

### BACKGROUND ART

A polyamide resin is a molding material having excellent slidability because of its crystallinity, but solid lubricants such as molybdenum disulfide, graphite and a fluorine resin and liquid lubricants such as various lubricating oils and silicone oil have been known to be blended in order to achieve more excellent sliding characteristics.

Among these improving agents for sliding characteristics, the solid lubricant is required to be blended in a large amount, and has a disadvantage of significantly deteriorating the toughness of the polyamide resin as a base. The liquid lubricant can impart highly effective slidability in a relatively small amount. However, in many cases, the liquid lubricant has poor compatibility with a resin as a base, whereby the surface of a molded article is often polluted with the liquid lubricant. This causes a disadvantage that the application of the liquid lubricant is limited.

As a method for improving such a disadvantage caused by the blending of various lubricants, a method for blending a carbon fiber and an aramid fiber (Patent Document 1) and a method for blending modified polyethylene, and the like have been proposed (Patent Document 2).

Such a polyamide resin composition makes it possible to provide a molded article having no disadvantage as described above and excellent sliding characteristics. However, in recent years, due to trends such as weight reduction of the molded article and complication of the shape of the molded article, higher levels of characteristics such as improvement in sliding characteristics have been required. In addition, abrasion properties of not only metals but also resin compositions are important due to complication of a product and the like. Thus, in the methods proposed so far, satisfiable characteristics are not necessarily obtained. Patent Document 3 describes a carbon fiber reinforced resin composition, a pellet formed by molding the same, a molded product obtained by injection molding the pellet, and an electronic device housing. Patent Document 4 describes a polyamide resin reinforced with liquid crystal fibers. Patent Document 5 describes a speaker cabinet consisting of a composite material where a fibril-converted LCP is distributed in one matrix consisting of a thermoplastic resin. Patent Document 6 describes a resin composition, a molded article, and a method for producing a molded article. Patent Document 7 describes an injection-molded article of thermoplastic resin and a method for producing the same. Patent Document 8 describes a polyamide resin composition having excellent slidability and mechanical properties.

### PRIOR ART DOCUMENTS

### PATENT DOCUMENT

Patent Document 1: WO 2017/110323
Patent Document 2: WO 2008/075699
Patent Document 3: WO 2015/053181 A1
Patent Document 4: JP H07 41665 A
Patent Document 5: JP H09 84168 A
Patent Document 6: JP 2016 108372 A
Patent Document 7: JP 2002 241510 A
Patent Document 8: JP 2012 102189 A

### SUMMARY OF THE INVENTION

### PROBLEMS TO BE SOLVED BY THE INVENTION

The present invention provides a polyamide-based resin composition for injection molding suitable for a sliding component required to have excellent moldability, heat resistance stability, abrasion resistance, and sliding stability.

### MEANS FOR SOLVING THE PROBLEMS

As a result of intensive studies to achieve the above object, the present inventors have found that an organic fiber having a liquid crystal skeleton, particularly a polyester fiber affects sliding characteristics, and have achieved the present invention.

That is, the present invention has the following configurations.

A polyamide-based resin composition for injection molding as set out in the appended set of claims.

A sliding component as set out in the appended set of claims.

### EFFECT OF THE INVENTION

The polyamide-based resin composition of the present invention has not only excellent moldability and heat resistance stability but also improved abrasion resistance to provide further improved sliding characteristics such as reduction in a coefficient of dynamic friction.

### MODE FOR CARRYING OUT THE INVENTION

Hereinafter, the present invention will be specifically described.

A crystalline polyamide resin (A) in the present invention is not particularly limited as long as the crystalline polyamide resin (A) is a crystalline polymer having an amide bond (-NHCO-) in its main chain, and examples thereof include, but are not limited to, crystalline polyamide resins such as polyamide 6 (PA6), polyamide 66 (PA66), polyamide 46 (PA46), polyamide 11 (PA11), polyamide 12 (PA12), polyamide 610 (PA610), polyamide 612 (PA612), polymethaxylylene adipamide (PAMXD6), hexamethylenediamine-terephthalic acid polymer (PA6T), a copolymer of hexamethylenediamine-terephthalic acid and adipic acid (PA6T/66), a copolymer of hexamethylenediamine-terephthalic acid and εcaprolactam (PA6T/6), a trimethylhexamethylenediamine-terephthalic acid polymer (PATMD-T), a copolymer of m-xylylenediamine with adipic acid and isophthalic acid (PAMXD-6/I), a copolymer of trihexamethylenediamine with terephthalic acid and ε-caprolactam (PATMD-T/6), and a copolymer of diaminodicyclohexylenemethane (CA) with isophthalic acid and lauryllactam, and blends thereof.

The crystalline polyamide resin (A) is a polyamide having a melting point of 170°C or higher. A crystalline polyamide having a melting point lower than the above-mentioned melting point often has a glass transition temperature of 40°C or lower, which causes a fear that the surface of the crystalline polyamide is softened by heat occurring during sliding. The melting point of the crystalline polyamide resin (A) is more preferably 200°C or higher, and still more preferably 220°C or higher. The upper limit of the melting point of the crystalline polyamide resin (A) is preferably 350°C or lower from the viewpoint of suppressing the decomposition of a polyester fiber having a liquid crystal skeleton.

In the present invention, as the crystalline polyamide resin (A), polyamide 6 and polyamide 66 are particularly preferable.

The relative viscosity of the crystalline polyamide resin (A) in the present invention is not particularly limited, but a crystalline polyamide resin having a relative viscosity of 2.0 to 5.0 as measured with a 96% sulfuric acid solution (concentration of polyamide resin: 1 g/dl, temperature: 25°C) can be used. The relative viscosity of the crystalline polyamide resin (A) is preferably 2.0 to 3.5, and more preferably 2.1 to 3.4.

The blending amount (content) of the crystalline polyamide resin (A) is 75 to 98% by mass, based on the total mass of the polyamide-based resin composition.

An organic fiber (B) in the present invention is a polyester fiber (B) having a liquid crystal skeleton (hereinafter, may be referred to as liquid crystal polyester fiber (B)). Examples of the polyester constituting the liquid crystal polyester fiber (B) include, but are not limited to, polycondensates of ethylene terephthalate and para-hydroxybenzoic acid, polycondensates of a dihydric phenol, phthalic acid, and para-hydroxybenzoic acid, and polycondensates of 2,6-hydroxynaphthoic acid and para-hydroxybenzoic acid. Any polyester may be used as long as the polyester exhibits liquid crystalline properties provided by regularly arranging linear chains of molecules and is defined as a synthetic resin belonging to a thermoplastic resin.

Another examples of the polyester constituting the liquid crystal polyester fiber (B) include a polymer composed of an aromatic dicarboxylic acid, an aromatic diol and/or an aromatic hydroxycarboxylic acid, or derivatives thereof, and include, in some cases, copolymers of the foregoing with an alicyclic dicarboxylic acid, an alicyclic diol, an aliphatic diol, or derivatives thereof. Here, examples of the aromatic dicarboxylic acid include terephthalic acid, isophthalic acid, 4,4'-dicarboxydiphenyl, 2,6-dicarboxynaphthalene, 1,2-bis(4-carboxyphenoxy)ethane, and nuclear-substituted forms thereof that have been substituted with an alkyl, aryl, alkoxy or halogen group. Examples of the aromatic diol include hydroquinone, resorcin, 4,4'-dihydroxydiphenyl, 4,4'-dihydroxybenzophenone, 4,4'-dihydroxydiphenylmethane, 4,4'-dihydroxydiphenylethane, 2,2-bis(4-hydroxyphenyl)propane, 4,4'-dihydroxydiphenylether, 4,4'-dihydroxydiphenylsulfone, 4,4'-dihydroxydiphenylsulfide, 2,6-dihydroxynaphthalene, 1,5-dihydroxynaphthalene, and nuclear-substituted forms thereof that have been substituted with an alkyl, aryl, alkoxy or halogen group. Examples of the aromatic hydroxycarboxylic acid include p-hydroxybenzoic acid, m-hydroxybenzoic acid, 2-hydroxynaphthalene-6-carboxylic acid, 1-hydroxynaphthalene-5-carboxylic acid, and nuclear-substituted forms thereof that have been substituted with an alkyl, aryl, alkoxy or halogen group. Examples of the alicyclic dicarboxylic acid include trans-1,4-dicarboxycyclohexane, cis-1,4-dicarboxycyclohexane, and nuclear-substituted forms thereof that have been substituted with an alkyl, aryl or halogen group. Examples of the alicyclic and aliphatic diols include trans-1,4-dihydroxycyclohexane, cis-1,4-dihydroxycyclohexane, ethylene glycol, 1,4-butanediol, and xylylenediol.

The liquid crystal polyester fiber (B) may contain other polymers or additives as long as the object of the present invention is not hindered, or may be coated with a converging agent.

The fiber diameter of the liquid crystal polyester fiber (B) is 0.1 to 50 um and the fiber length of the liquid crystal polyester fiber (B) is 0.3 to 5 mm. The fiber diameter is preferably 1 to 30 um, more preferably 8 to 25 um, and particularly preferably 10 to 22 um. A chopped strand type liquid crystal polyester fiber is preferably used.

As the liquid crystal polyester fiber (B), "Zxion (registered trademark)" manufactured by KB SEIREN Co., Ltd. and "VECTRAN (registered trademark)" manufactured by Kuraray Co., Ltd. can be used.

The blending amount (content) of the liquid crystal polyester fiber (B) is 2 to 25% by mass, based on the total mass of the polyamide-based resin composition. When the blending amount is less than 0.1% by mass, an effect of improving sliding characteristics is insufficient. Meanwhile, when the blending amount is more than 40% by mass, the effect reaches saturation, which is undesirable, whereby failure such as floating of the liquid crystal polyester fiber may occur in the appearance of a molded article.

In the present invention, the reason why the sliding characteristics are improved by using the liquid crystal polyester fiber (B), particularly the reason why the sliding characteristics via dust are improved is considered to be that the good friction characteristics of the liquid crystal polyester fiber impart lubricity to the surface characteristics of the polyamide-based resin composition. In addition, while the polyamide-based resin composition is damaged, the liquid crystal polyester fiber present in the composition is detached, and precipitated on the surface. It is also suggested that the fiber is sheared and shredded in the fiber direction to be abraded, and an intermediate layer having lubricity is formed between an abrading body and an abraded body to prevent direct contact with the dust. The abrasion via the dust is contact due to gravel or other inorganic substances, which causes severe damage to occur in the outermost surface. Thus, it is insufficient to merely impart lubricity or improve the elastic modulus of the surface of the resin composition. Accordingly, the formation of an intermediate protective layer having lubricity is extremely effective for suppressing the dust abrasion. Examples of the organic fiber having a liquid crystal skeleton include an aramid fiber. However, not shearing and shredding in the fiber direction as in the liquid crystal polyester fiber but shearing at an intermolecular wall interface occurs, whereby the dust abrasion progresses without forming the intermediate layer without causing the same mechanism to occur. In the carbon fiber, the fiber precipitated simultaneously with the damage acts as an intermediate that may abrade the resin composition. This may promote the abrasion, which is not suitable. In addition, when the mating abrading body is a resin, the mating abrading body may also be abraded.

In the present invention, strength and rigidity can be significantly improved by further adding a filler. Examples of the filler include a glass fiber, a carbon fiber, a metal fiber, an aramid fiber, asbestos, potassium titanate whisker, wollastonite, a glass flake, a glass bead, talc, mica, clay, calcium carbonate, barium sulfate, titanium oxide, and aluminum oxide.

These are blended when priority is given to the strength and the rigidity, and the blending amount (content) thereof is preferably 5 to 60% by mass, and particularly preferably 5 to 40% by mass, based on the total mass of the polyamide-based resin composition. When priority is given to the sliding characteristics, the blending amount (content) thereof is preferably 5% by mass or less based on the total mass of the polyamide-based resin composition.

In the present invention, toughness can be significantly improved by further adding a polyolefin resin or a thermoplastic elastomer. Examples of the polyolefin resin include olefin-based resins such as high density polyethylene, low density polyethylene, ultra-high molecular weight polyethylene, linear low density polyethylene, polypropylene, poly(1-butene), and poly(4-methylpentene). Examples of the thermoplastic elastomer include a styrene-based thermoplastic elastomer, an olefin-based thermoplastic elastomer, a polyamide-based thermoplastic elastomer, a polyester-based thermoplastic elastomer, and a polyurethane-based thermoplastic elastomer.

When these are blended, the blending amount (content) thereof is preferably 0.5 to 10% by mass, and more preferably 1 to 8% by mass, based on the total mass of the polyamide-based resin composition.

There is no problem even if, in addition to the fillers (A) and (B) and the above-described fillers, polyolefin resin, and thermoplastic elastomer, carbon black which is weather resistance improvers used for ordinary polyamide-based resin compositions, a copper oxide and/or an alkali metal halide, a light or heat stabilizer, a mold release agent, a crystal nucleating agent, a lubricant, an anti-static agent, a pigment, a dye, and a coupling agent are blended in the polyamide-based resin composition of the present invention as long as slidability and moldability are not impaired.

When these are blended, the total blending amount (content) thereof is preferably 0.1 to 5% by mass, and more preferably 0.2 to 3% by mass, based on the total mass of the polyamide-based resin composition.

A method for producing the polyamide-based resin composition of the present invention is not particularly limited, and a general single screw extruder, twin screw extruder, and pressure kneader can be used as a kneader, but a twin screw extruder is particularly preferable in the present invention.

As one aspect, the above (A) and (B), and a pigment depending on the application are mixed, and the mixture is charged into a twin-screw extruder. The polyamide-based resin composition having excellent slidability can be produced by uniform kneading with the twin screw extruder. The kneading temperature of the twin screw extruder is preferably 220 to 300°C, and the kneading time thereof is preferably about 2 to 15 minutes.

The polyamide-based resin composition of the present invention is suitable for injection molding, and in particular, can be widely used in various applications such as electric and electronic components, automobile components, building components, and industrial components in which slidability is required by injection molding. As the specific applications, the polyamide-based resin composition is useful as a bearing, a gear, a door checker, a chain guide, and a retainer plate component

### EXAMPLES

Hereinafter, the present invention will be described in more detail with reference to Examples, but the present invention is not limited to these Examples at all.

Raw materials used in Examples and Comparative Examples of the present invention are as follows.

### Crystalline Polyamide Resin (A)

A1: Polyamide 66 (RV = 2.8), Vydyne 21 FSR (manufactured by Ascend), melting point: 265°C
A2: Polyamide 6 (RV = 2.6), ZISAMIDE TP 4208 (manufactured by ZIG SHENG INDUSTRIAL CO., LTD.), melting point: 225°C
A3: Polyamide 12 (RV = 2.4), Rilsamid (manufactured by Arkema K.K.), melting point: 175°C

### Liquid Crystal Polyester Fiber (B)

B1: Zxion-VS chopped fiber, fiber diameter: 14 um, fiber length: 3 mm (manufactured by KB SEIREN, Ltd.)
B2: Zxion-TS chopped fiber, fiber diameter: 20 um, fiber length: 3 mm (manufactured by KB SEIREN, Ltd.)
B3: Zxion-VS chopped milled fiber, fiber diameter: 14 um, fiber length: 0.3 mm (manufactured by KB SEIREN, Ltd.)

### Inorganic Fiber (C)

C1: glass fiber, chopped fiber, T-275H, fiber diameter: 11 um, fiber length: 3 mm (manufactured by Nippon Electric Glass Co., Ltd.)
C2: Carbon fiber CFUW, chopped fiber, fiber diameter: 10 um, fiber length: 3 mm (manufactured by Nippon Polymer Sangyo Co., Ltd.)

### Other Organic Fiber (D)

D: Para-aramid fiber, chopped strand, Technora T 322 UR 3-12, fiber diameter: 12 um, fiber length: 3 mm (manufactured by Teijin Limited)

### [Examples 1 to 11, and Comparative Examples 1 to 7]

In the production of evaluation samples, raw materials were weighed in blending ratios for the polyamide-based resin compositions shown in Tables 1 and 2, and mixed in a tumbler. The mixture was then charged into a twin screw extruder. The set temperature and kneading time of the twin screw extruder were respectively set to 250°C to 300°C and 5 to 10 minutes. Various evaluation samples were molded from the obtained pellets using an injection molding machine. The cylinder temperature and mold temperature of the injection molding machine were respectively set to 250°C to 290°C and 80°C.

Various evaluation methods are as follows. The evaluation results are shown in Tables 1 and 2.

### 1. Relative Viscosity (RV) of Polyamide Resin (96% Sulfuric Acid Solution Method)

Measurement was performed using an Ubbelohde's viscometer at 25°C using a 96% by mass sulfuric acid solution with a polyamide resin concentration of 1 g/dl.

### 2. Melting Point of Polyamide Resin

Measurement was performed using a differential scanning calorimeter EXSTAR 6000 manufactured by Seiko Instruments with a temperature rising rate of 20°C/min to determine an endothermic peak temperature.

### 3. Abrasion Characteristics

A flat plate (size: 50 mm × 50 mm) of a polyamide resin composition obtained by injection molding and a SUS circular jig having a protrusion having a length of 8 mm and a width of 1.3 mm were continuously slid for 20 minutes under conditions of a load of 48.9 kgf/cm² and a speed of 15 cm/sec in a state where these were brought into contact with each other using a thrust type abrasion tester. Then, from a difference between the mass of the flat plate before abrasion and the mass of the flat plate after abrasion, and the total abrasion distance, a coefficient of dynamic friction was calculated from an abrasion amount (mg/km) converted per unit distance and a converged load value during an abrasion test.

### 4. Abrasion Characteristics via Dust

Using a thrust type abrasion tester, 1 mg of a grease containing molybdenum disulfide is uniformly applied onto a flat plate (size: 50 mm × 50 mm) of a polyamide resin composition, and 2 mg of dust prepared by mixing silica sand and volcanic ash at a mass ratio of 1 : 1 is then applied in order to introduce inorganic substances having different particle sizes and hardnesses. A cylindrical molded article made of polyoxymethylene (POM) and the surface were continuously slid for 30 minutes under conditions of a load of 30 kgf/cm² and a speed of 40 mm/sec in a state where these were brought into contact with each other. Then, from a difference between the mass of the flat plate and a cylindrical molded article before abrasion and the mass of the flat plate and the cylindrical molded article after abrasion, and the total abrasion distance, a coefficient of dynamic friction was calculated from an abrasion amount (mg/km) converted per unit distance and a converged load value during an abrasion test.

### 5. Moldability

Molding was performed under the above molding temperature conditions using a mold equipped with a mold release force measuring device, and mold release forces from the 31th shot to the 35th shot were measured to determine a mold release resistance value.

### 6. Heat Resistance Stability

A test piece was subjected to a heat treatment in a recycling type air oven (a hot-air circulating dryer NH-401 S manufactured by Nagano Kagaku Kikai Seisakusho) according to the procedure mentioned in detail in ISO 2578. The test piece was taken out from the oven after a predetermined test time (250 hours) under the environment of 120°C, cooled down to room temperature, and tightly closed in a bag backed with aluminum until preparation for the test was finished. Then, tensile strength was measured according to ISO 527-1,2. Retention rates before and after the treatment were calculated from an average value obtained from three test pieces.

**[Table 1]**

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Composition (% by mass) | Crystalline Polyamide Resin (A1) | 90 | 0 | 0 | 90 | 90 | 96 | 80 | 96 | 80 | 96 | 80 |
| | Crystalline Polyamide Resin (A2) | 0 | 90 | 0 | 0 | 0 | 0 | 0 | 0 | 0 | 0 | 0 |
| | Crystalline Polyamide Resin (A3) | 0 | 0 | 90 | 0 | 0 | 0 | 0 | 0 | 0 | 0 | 0 |
| | Liquid Crystal Polyester Fiber (B1) | 10 | 10 | 10 | 0 | 0 | 4 | 20 | 0 | 0 | 0 | 0 |
| | Liquid Crystal Polyester Fiber (B2) | 0 | 0 | 0 | 10 | 0 | 0 | 0 | 4 | 20 | 0 | 0 |
| | Liquid Crystal Polyester Fiber (B3) | 0 | 0 | 0 | 0 | 10 | 0 | 0 | 0 | 0 | 4 | 20 |
| | Inorganic Fiber (C1) | 0 | 0 | 0 | 0 | 0 | 0 | 0 | 0 | 0 | 0 | 0 |
| | Inorganic Fiber (C2) | 0 | 0 | 0 | 0 | 0 | 0 | 0 | 0 | 0 | 0 | 0 |
| | Other Organic Fiber (D) | 0 | 0 | 0 | 0 | 0 | 0 | 0 | 0 | 0 | 0 | 0 |
| Abrasion Characteristics | Abrasion Amount (mg/km) | 11 | 10 | 11 | 13 | 8 | 30 | 7 | 28 | 9 | 23 | 7 |
| | Coefficient of Dynamic Friction | 0.16 | 0.15 | 0.16 | 0.18 | 0.15 | 0.26 | 0.14 | 0.25 | 0.14 | 0.22 | 0.13 |
| Abrasion Characteristics Via Dust | Abrasion Amount of Flat Plate (mg/km) | 14 | 16 | 17 | 14 | 12 | 18 | 10 | 18 | 11 | 17 | 8 |
| | Coefficient of Dynamic Friction | 0.05 | 0.06 | 0.05 | 0.05 | 0.05 | 0.08 | 0.05 | 0.08 | 0.05 | 0.07 | 0.05 |
| | Abrasion Amount of Cylindrical Molded Article (mg/km) | 23 | 24 | 23 | 25 | 27 | 30 | 23 | 32 | 24 | 29 | 22 |
| Moldability | Mold Release Resistance Value (Mpa) | 0.7 | 0.8 | 0.6 | 0.9 | 0.6 | 0.8 | 0.9 | 0.8 | 0.8 | 0.9 | 0.6 |
| Heat Resistance Stability | Tensile Strength Retention Rate (%) at 120°c for 250 hr | 92 | 93 | 94 | 92 | 93 | 95 | 91 | 96 | 91 | 97 | 92 |

**[Table 2]**

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Composition (% by mass) | Crystalline Polyamide Resin (A1) | 100 | 90 | 80 | 90 | 80 | 90 | 80 |
| | Crystalline Polyamide Resin (A2) | 0 | 0 | 0 | 0 | 0 | 0 | 0 |
| | Crystalline Polyamide Resin (A3) | 0 | 0 | 0 | 0 | 0 | 0 | 0 |
| | Liquid Crystal Polyester Fiber (B1) | 0 | 0 | 0 | 0 | 0 | 0 | 0 |
| | Liquid Crystal Polyester Fiber (B2) | 0 | 0 | 0 | 0 | 0 | 0 | 0 |
| | Liquid Crystal Polyester Fiber (B3) | 0 | 0 | 0 | 0 | 0 | 0 | 0 |
| | Inorganic Fiber (C1) | 0 | 10 | 20 | 0 | 0 | 0 | 0 |
| | Inorganic Fiber (C2) | 0 | 0 | 0 | 10 | 20 | 0 | 0 |
| | Other Organic Fiber (D) | 0 | 0 | 0 | 0 | 0 | 10 | 20 |
| Abrasion Characteristics | Abrasion Amount (mg/km) | 100 | 50 | 35 | 24 | 12 | 44 | 28 |
| | Coefficient of Dynamic Friction | 0.36 | 0.36 | 0.29 | 0.32 | 0.22 | 0.29 | 0.20 |
| Abrasion Characteristics Via Dust | Abrasion Amount of Flat Plate (mg/km) | 25 | 37 | 53 | 22 | 20 | 23 | 21 |
| | Coefficient of Dynamic Friction | 0.09 | 0.08 | 0.07 | 0.07 | 0.06 | 0.07 | 0.06 |
| | Abrasion Amount of Cylindrical Molded Article (mg/km) | 42 | 55 | 78 | 54 | 70 | 37 | 35 |
| Moldability | Mold Release Resistance Value (Mpa) | 1.2 | 0.4 | 0.5 | 0.5 | 0.4 | 0.9 | 1.1 |
| Heat Resistance Stability | Tensile Strength Retention Rate (%) at 120°C for 250 hr | 95 | 97 | 98 | 97 | 97 | 93 | 92 |

Examples 1 to 11 have physical properties equal to or higher than those of Comparative Examples 1 to 7 in the abrasion test in which the SUS circular jig is brought into contact and the abrasion test via dust, and achieve good abrasion characteristics. In particular, in the abrasion test via dust, this effect is remarkable. It can be said that the mold release resistance value is also 1.0 MPa or less, which also satisfies requirements for moldability of continuous injection molding, and also provides heat resistance stability at a satisfactory level.

Comparative Example 1 is unmodified polyamide 66, which causes a large abrasion amount. Comparative Examples 2 and 3 contribute to the abrasion property in the abrasion test in which the SUS circular jig is brought into contact, but these do not have the same effects as those in Examples 1 to 11. In addition, the abrasion amount after the abrasion test via dust cannot be reduced, which results in an increase in the abrasion of a POM cylindrical molded article as a mating material. The tendency of increasing the abrasion of the POM cylindrical molded article which is a mating material in the abrasion test via dust is also observed in Comparative Examples 4 and 5, whereby an inorganic fibrous reinforcing material is found to be unsuitable when the mating material to be contacted is a polymer. As in Patent Literature 1, Comparative Examples 6 and 7 certainly contribute to the abrasion property, but has lower contribution than that of the composition of the present invention.

As a main modification mechanism of Example 1 to 11, it is suggested that the composition is damaged, and at the same time, the polyester fiber having a liquid crystal skeleton present in the composition is sheared and shredded in the fiber direction to be abraded, and the intermediate layer having lubricity is formed between the abrading body and the abraded body to prevent direct contact. It is also suggested that the effect of reducing the coefficient of dynamic friction due to the contribution of the low friction property of the liquid crystal polyester fiber itself is exhibited on the surface.

### INDUSTRIAL APPLICABILITY

The polyamide-based resin composition of the present invention is a molding material having excellent sliding characteristics. The polyamide-based resin composition is suitable for a sliding component which is required to have high abrasion resistance and to which a particularly high surface pressure is imposed, and can be expected to largely contribute to the industry as an engineering plastic that can be used in a wide range of fields.

## Claims

1. A polyamide-based resin composition for injection molding comprising a crystalline polyamide resin (A) and a polyester fiber (B) having a liquid crystal skeleton,
wherein the crystalline polyamide resin (A) has a melting point of 170°C or higher as determined according to the method identified in the specification,
wherein the blending amount of the crystalline polyamide resin (A) is 75 to 98% by mass, based on the total mass of the polyamide-based resin composition,
wherein the blending amount of the liquid crystal polyester fiber (B) is 2 to 25% by mass, based on the total mass of the polyamide-based resin composition,
wherein the fiber diameter of the liquid crystal polyester fiber (B) is 0.1 to 50 um, and
wherein the fiber length of the liquid crystal polyester fiber (B) is 0.3 to 5 mm.

2. A sliding component comprising the polyamide-based resin composition according to claim 1.

## Patentansprüche

1. Harzzusammensetzung auf Polyamidbasis zum Spritzgießen, umfassend ein kristallines Polyamidharz (A) und eine Polyesterfaser (B) mit einem Flüssigkristallgerüst,
wobei das kristalline Polyamidharz (A) einen Schmelzpunkt von 170°C oder höher aufweist, wie nach dem in der Beschreibung angegebenen Verfahren bestimmt,
wobei die Mischungsmenge des kristallinen Polyamidharzes (A) 75 bis 98 Massen-%, bezogen auf die Gesamtmasse der Harzzusammensetzung auf Polyamidbasis, beträgt,
wobei die Mischungsmenge der Flüssigkristall-Polyesterfaser (B) 2 bis 25 Massen-%, bezogen auf die Gesamtmasse der Harzzusammensetzung auf Polyamidbasis, beträgt,
wobei der Faserdurchmesser der Flüssigkristall-Polyesterfaser (B) 0,1 bis 50 µm beträgt, und
wobei die Faserlänge der Flüssigkristall-Polyesterfaser (B) 0,3 bis 5 mm beträgt.

2. Gleitelement, umfassend die Harzzusammensetzung auf Polyamidbasis nach Anspruch 1.

## Revendications

1. Composition de résine à base de polyamide pour moulage par injection comprenant une résine de polyamide cristallin (A) et une fibre de polyester (B) ayant un squelette à cristaux liquides,
dans laquelle la résine de polyamide cristallin (A) a un point de fusion de 170 °C ou supérieur tel que déterminé conformément au procédé identifié dans la spécification,
dans laquelle la quantité de mélange de la résine de polyamide cristallin (A) est de 75 à 98 % en masse, basée sur la masse totale de la composition de résine à base de polyamide,
dans laquelle la quantité de mélange de la fibre de polyester à cristaux liquides (B) est de 2 à 25 % en masse, basée sur la masse totale de la composition de résine à base de polyamide,
dans laquelle le diamètre de fibre de la fibre de polyester à cristaux liquides (B) est de 0,1 à 50 µm, et
dans laquelle la longueur de fibre de la fibre de polyester à cristaux liquides (B) est de 0,3 à 5 mm.

2. Composant coulissant comprenant la composition de résine à base de polyamide selon la revendication 1.
